(19) Europäisches Patentamt
European Patent Office
Office européen des brevets

(11) Veröffentlichungsnummer : **0 166 694**
**B1**

(12) # EUROPÄISCHE PATENTSCHRIFT

(45) Veröffentlichungstag der Patentschrift : **17.05.89**

(51) Int. Cl.$^4$ : **C 07 C 83/04**, A 01 N 33/24

(21) Anmeldenummer : **85810289.0**

(22) Anmeldetag : **21.06.85**

(54) **Diphenyläther-hydroxylamine mit herbizider Wirkung.**

(30) Priorität : **27.06.84 CH 3094/84**

(43) Veröffentlichungstag der Anmeldung : **02.01.86 Patentblatt 86/01**

(45) Bekanntmachung des Hinweises auf die Patenterteilung : **17.05.89 Patentblatt 89/20**

(84) Benannte Vertragsstaaten : **BE CH DE FR GB IT LI NL**

(56) Entgegenhaltungen :
**GB-A- 2 035 309**
**GB-A- 2 137 990**
**US-A- 4 419 124**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Dürr, Dieter, Dr.**
**Brändelistalweg 16**
**CH-4103 Bottmingen (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 166 694 B1

Jouve, 18, rue St-Denis, 75001 Paris, France

**Beschreibung**

Die vorliegende Erfindung betrifft neue Diphenyläther-hydroxylamine mit herbizider Wirkung, Verfahren zu deren Herstellung, sie als Herbizide enthaltende Mittel sowie deren Verwendung als selektive Herbizide in Nutzpflanzenkulturen.

Die neuen Diphenyläther-hydroxylamine entsprechen der Formel I

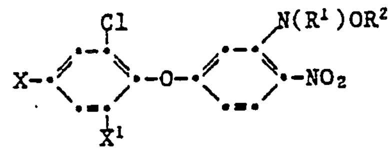

(I)

worin

$R^1$ Wasserstoff oder einen $C_1$-$C_6$-Alkyl-, $C_3$-$C_6$-Alkenyl- oder $C_3$-$C_6$.-Alkinylrest, der unsubstituiert oder durch Halogen, Cyan, Nitro, $C_1$-$C_4$-Alkoxy, $C_1$-$C_4$-Alkylthio oder Di-$C_1$-$C_4$-alkylamino substituiert sein kann,

$R^2$ ist ein $C_1$-$C_6$-Alkyl, $C_3$-$C_6$-Alkenyl oder $C_3$-$C_6$-Alkinylrest, der unsubstituiert oder wie der Alkylrest $R^1$ substituiert sein kann oder

$R^1$ und $R^2$ bilden zusammen mit dem Stickstoff- und dem Sauerstoffatom auch einen gesättigten oder teilweise gesättigten 5-6 gliedrigen Heterocyclus, der gegebenenfalls noch ein weiteres Stickstoffatom enthalten und/oder benzannelliert und durch $C_1$-$C_2$-Alkyl oder Halogen substituiert sein kann,

X Chlor oder die Trifluormethylgruppe und

$X^1$ Wasserstoff oder Chlor bedeuten.

Die Alkyl-, Alkenyl- oder Alkinylreste können verzweigt oder geradkettig sein.

Als heterocyclische Reste, welche durch die Reste $R^1$ und $OR^2$ zusammen mit dem Stickstoffatom, an das sie gebunden sind gebildet werden können, kommen beispielsweise folgende in Frage: Isoxazolin-2-yl, Benz-1,2-oxazol-2-yl, 1,2-Oxazan-2-yl, Benz-1,2-oxazin, 1,2,3-Oxadiazol-2-yl, 1,2,4-Oxadiazol-2-yl, Furazan-2-yl, 1,2,3-Oxadiazin-2-yl, 1,2,4-Oxadiazin-2-yl etc.

In der 3'-Stellung durch substituierte Amino- oder Iminoreste substituierte 2-Chlor-4'-nitro-4-trifluormethyl-diphenyläther mit herbizider Wirkung, welche sich beispielsweise zur Unkrautkontrolle in Reiskulturen eignen, sind aus der US-Patentschrift 4,419,124 bekannt. Die vorliegenden Diphenyläther-hydroxylamine sind neu und zeichnen sich durch hervorragende selektiv-herbizide Wirkung in Nutzpflanzenkulturen aus, wie z. B. Getreide, Mais, Hirse, Reis, Soja, Baumwolle, Zuckerrüben etc., wo sie auch Unkräuter und Ungräser schädigen, denen bisher nur mit Totalherbiziden beizukommen war. Sie wirken vor allem im Nachauflauf-Einsatz und zeichnen sich durch schnellen Abbau aus.

Unter den Verbindungen der Formel I haben sich vor allem diejenigen bewährt, in denen

$R^1$ Wasserstoff oder einen $C_1$-$C_6$-Alkylrest und $R^2$ einen $C_1$-$C_6$-Alkyl-, $C_3$-$C_6$-Alkenyl- oder $C_3$-$C_6$-Alkinylrest bedeutet, welche Reste unsubstituiert oder durch Halogen, Cyan, Nitro, $C_1$-$C_4$-Alkoxy, $C_1$-$C_4$-Alkylthio oder Di-$C_1$-$C_4$-Alkylamino substituiert sein können, während X die Trifluormethylgruppe und $X^1$ Wasserstoff bedeuten;

$R^1$ Wasserstoff, $R^2$ einen $C_1$-$C_6$-Alkyl-, $C_3$-$C_6$-Alkenyl oder $C_3$-$C_6$-Alkinylrest, der durch Halogen, Cyan, Nitro, $C_1$-$C_4$-Alkoxy, $C_1$-$C_4$-Alkylthio oder Di-$C_1$-$C_4$-alkylamino substituiert sein kann, während X die Trifluormethylgruppe und $X^1$ Wasserstoff bedeuten;

insbesondere die Verbindungen

2-Chlor-3'-methoxyamino-4-nitro-4-trifluormethyldiphenyläther,
2-Chlor-3'-N,O-dimethyl-hydroxylamino-4'-nitro-4-trifluormethyldiphenyläther,
2-Chlor-3'-N-tert-butoxyamino-4'-nitro-4-trifluormethyl-diphenyläther,
2-Chlor-3'-N-äthoxyamino-4'-nitro-4-trifluormethyl-diphenyläther,
2-Chlor-3'-N-allyloxyamino-4'-nitro-4-trifluormethyl-diphenyläther,
2-Chlor-3'-N-chlorallyloxyamino-4'-nitro-4-trifluormethyl-diphenyläther,
2-Chlor-3'-N-n-butoxyamino-4'-nitro-4-trifluormethyl-diphenyläther,
2-Chlor-3'-N-n-hexyloxyamino-4'-nitro-4-trifluormethyl-diphenyläther,
2-Chlor-3'-N-benzyloxyamino-4'-nitro-4-trifluormethyl-diphenyläther,
2-Chlor-3'-N-(2'-chlorbenzyloxy)-amino-4'-nitro-4-trifluormethyldiphenyläther,
2-Chlor-3'-N-isobutoxyamino-4'-nitro-4-trifluormethyl-diphenyläther,
2-Chlor-3'-N-isopropoxyamino-4'-nitro-4-trifluormethyl-diphenyläther,
2-Chlor-3'-N-n-propoxyamino-4'-nitro-4-trifluormethyl-diphenyläther,
2-Chlor-3-N-methallyloxyamino-4'-nitro-4-trifluormethyl-diphenyläther.

Die Verbindungen der Formel I werden nach an sich bekannten Synthese-Wegen hergestellt.

Gemäss dem erfindungsgemässen Verfahren werden die Diphenylätherhydroxylamine der Formel I hergestellt, indem man ein 5-ortho-Chlorphenoxy-nitrobenzol der Formel II

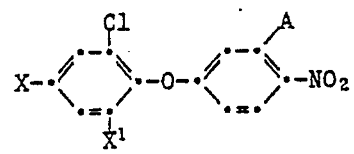

(II)

worin X und $X^1$ die unter Formel I gegebene Bedeutung haben und A eine Abgangsgruppe, Nitro, Chlor oder

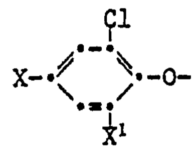

darstellt, in einem inerten organischen Lösungsmittel in Gegenwart der mindestens äquimolaren Menge einer Base mit einem Hydroxylamin der Formel III umsetzt

$$H—N(R^1)—OR^2 \qquad (III)$$

Gemäss einem weiteren erfindungsgemässen Verfahren erhält man Diphenylätherhydroxylamine der Formel I, in denen $R^1$ nicht Wasserstoff bedeutet, indem man ein Diphenyläther-hydroxylamin der Formel Ia

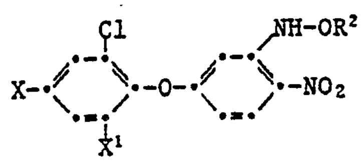

(Ia)

worin $R^2$, X und $X^1$ die unter Formel I gegebene Bedeutung haben, in einem inerten organischen Lösungsmittel, in Gegenwart der mindestens äquimolaren Menge einer Base, mit einem reaktionsfähigen Alkylester der Formel IV umsetzt,

$$R^1—Y \qquad (IV),$$

worin $R^1$ die unter der Formel I gegebene Bedeutung hat und Y ein Halogenatom oder das Anion einer Alkyl-, Halogenalkyl- oder Arylsulfon- oder -schwefelsäure bedeutet.

Die Umsetzungen erfolgen vorteilhafterweise in einem den Reaktions-Partnern gegenüber inerten Lösungsmittel, in Anwesenheit der molaren Menge einer Base als säurebindendes Mittel. Die Temperatur dieser Umsetzungen kann zwischen 0 °C und dem Siedepunkt des Reaktionsgemisches liegen. Am vorteilhaftesten wird bei Raumtemperatur gearbeitet.

Als inerte organische Lösungsmittel kommen vorzugsweise Alkanole, Aether, Aromate, Amide oder Sulfoxide in Frage. Als Beispiele seien genannt Aethanol, Propanol, Isopropanol, Hexanol, Cyclohexanol, Methyläthylketon, Dioxan, Tetrahydrofuran, Benzol, Toluol, Dimethylformamid, Dimethylsulfoxid, Acetonitril.

Als Basen kommen tertiäre Amine in Betracht sowie Alkali- und Erdalkalimetallcarbonate, -bicarbonate und -hydroxyde.

Die Ausgangsprodukte der Formel II sind entweder bekannte Diphenyläther oder sie können durch Kondensation eines ortho-Chlorphenols und eines para-Nitro-Chlorbenzols respective eines 4-Nitroresorcinols mit 2 Molekülen 1,2-Dichlorbenzol in Gegenwart einer Base hergestellt werden, gemäss den folgenden Reaktionsschemen :

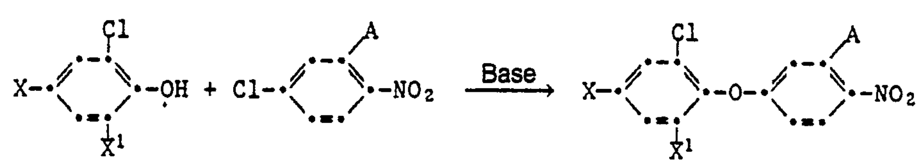


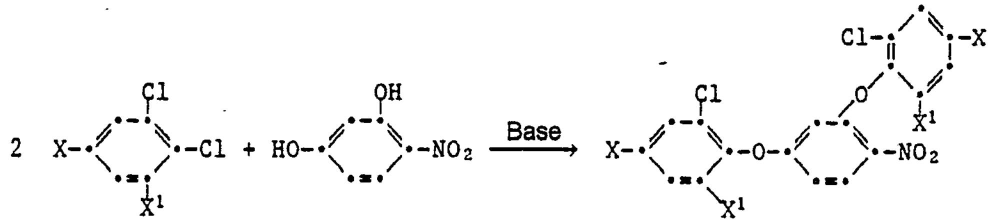

Die Verbindungen der Formel I haben gute herbizide Eigenschaften. In grossen Aufwandmengen können sie als Totalherbizide eingesetzt werden. Interessant jedoch ist ihr Einsatz in Aufwandmengen von ca. 0,1 bis 5 kg pro Hektare als Selektivherbizide in Kulturpflanzungen, im Nachauflaufverfahren. Sie hemmen oder beeinträchtigen dort das Aufkommen von Unkräutern, zweikeimblättrigen, vor allem aber auch von vielen einkeimblättrigen Arten wie Lolium, Alopecurus, Rottboellia, Sorghum, Digitaria, Setaria und Panicum. Kulturpflanzen, wie Getreide, Gerste, Weizen, Roggen, Mais oder Reis aber auch andere wie Baumwolle und Soja werden dabei ganz oder mindestens bei der Aufwandmenge von 1 kg/ha geschont. Der Wirkstoff wird schnell abgebaut und es verbleiben keine Rückstände.

Einige der neuen Wirkstoffe eignen sich auch für die Desication und Defoliation von Baumwoll- oder Kartoffelkulturen, kurz bevor deren Ernte.

Uebliche Aufwandmengen an erfindungsgemässen Herbizid pro Hektar schwanken je nach Aktivität des eingesetzten Wirkstoffs, Bodenbeschaffenheit, Klima- und Witterungsbedingungen, Art und Zeitpunkt der Anwendung und Art der Kultur und der zu bekämpfenden Unkräuter zwischen 0,1 und 10,0 kg und liegen vorzugsweise zwischen 0,5 und 4,0 kg.

Ferner besitzen die Verbindungen der Formel I günstige wachstumsregulierende Effekte (Wuchshemmung). Es werden sowohl Monokotyledone wie auch Dikotyledonen in ihrem Wachstum beeinträchtigt. So können z. B. in der Landwirtschaft in tropischen Gegenden häufig als « cover crop » (Bodenbedecker) angepflanzte Leguminosen durch die Verbindungen der Formel I in ihrem Wachstum selektiv gehemmt werden, so dass zwar die Bodenerosion zwischen den Kulturpflanzen verhindert wird, die « cover crops » jedoch nicht zur Konkurrenz für die Kultur werden können.

Die Verbindungen der Formel I werden in unveränderter Form oder vorzugsweise als Mittel zusammen mit den in der Formulierungstechnik üblichen Hilfsmitteln eingesetzt und werden daher z. B. zu Emulsionskonzentraten, direkt versprühbaren oder verdünnbaren Lösungen, verdünnten Emulsionen, Spritzpulvern, löslichen Pulvern, Stäubemitteln, Granulaten, auch Verkapselungen in z. B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen, d. h. die den Wirkstoff der Formel I und gegebenenfalls einen festen oder flüssigen Zusatzstoff enthaltenden Mittel, Zubereitungen oder Zusammensetzungen werden in bekannter Weise hergestellt, z. B. durch inniges Vermischen und/oder Vermahlen der Wirkstoffe mit Streckmitteln, wie z. B. mit Lösungsmitteln, festen Trägerstoffen, und gegebenenfalls oberflächenaktiven Verbindungen (Tensiden).

Als Lösungsmittel können in Frage kommen : aromatische Kohlenwasserstoffe, bevorzugt die Fraktionen $C_8$ bis $C_{12}$, wie z. B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle, wie epoxidiertes Kokosnussöl oder Sojaöl ; oder Wasser.

Als feste Trägerstoffe, z. B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden.

Als gekörnte, adsorptive Granulatträger kommen poröse Typen wie z. B. Bimsstein, Ziegelbruch, Sepiolit oder Bentonit, als nicht sorptive Trägermaterialien z. B. Calcit oder Sand in Frange. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen als auch wasserlösliche synthetische oberflächenaktive Verbindungen sein.

Als Seifen seien die Alkali-, Erdalkali- oder gegebenenfalls substituierte Ammoniumsalze von höheren Fettsäuren ($C_{10}$-$C_{22}$), wie z. B. die Na- oder K-Salze der Oel- oder Stearinsäure, oder von natürlichen Fettsäuregemischen, die z. B. aus Kokosnuss- oder Talgöl gewonnen werden können, genannt. Ferner sind auch die Fettsäuremethyl-taurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z. B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2-Sulfonsäuregruppen und einen Fettsäurerest mit 8 bis 22 C-Atomen. Alkylarylsulfonate sind z. B. die Na-, Ca- oder

Triäthanolaminsalze der Dodecylbenzolsulfonsäure, der Dibutylnaphthalinsulfonsäure oder eines Naphthalinsulfonsäure-Formaldehydkondensationsproduktes.

Ferner kommen auch entsprechende Phosphate wie z. B. Salze des Phosphorsäureesters eines p-Nonylphenol-(4-14)-Aethylenoxid-Adduktes in Frage.

Als nicht ionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette, die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglykoläther, Polypropylen-Polyäthylenoxidaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitantrioleat in Betracht.

Bei den kationischen Tensiden handelt es sich vor allem um quaternäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z. B. das Stearyltrimethylammoniumchlorid oder das Benzyldi(2-chloräthyl)-äthylammoniumbromid.

Die in der Formulierungstechnik gebräuchlichen Tenside sind u. a. in folgenden Publikationen beschrieben :

« Mc Cutcheon's Detergents and Emulsifiers Annual » MC Publishing Corp., Ridgewood, New Jersey, 1979. M. and J. Ash. « Encyclopedia of Surfactants », Vol. I-III, Chemical Publishing Co., New York, 1980-1981. H. Stache, « Tensid-Taschenbuch », 2. Aufl., C. Hanser Verlag, München, Wien, 1981 ;

Die herbiziden Zubereitungen enthalten in der Regel 0,1 bis 95 %, insbesondere 0,1 bis 80 % Wirkstoff der Formel I, 1 bis 99,9 % eines festen oder flüssigen Zusatzstoffes und 0 bis 25 %, insbesondere 0,1 bis 25 % eines Tensides.

Insbesondere setzen sich bevorzugte Formulierungen folgendermassen zusammen : (% = Gewichtsprozent).

| | |
|---|---|
| Emulgierbare Konzentrate | |
| Aktiver Wirkstoff | 1 bis 20 %, bevorzugt 5 bis 10 % |
| oberflächenaktive Mittel | 5 bis 30 %, vorzugsweise 10 bis 20 % |
| flüssiges Trägermittel | 50 bis 94 %, vorzugsweise 70 bis 85 % |
| Stäube | |
| Aktiver Wirkstoff | 0,1 bis 10 %, vorzugsweise 0,1 bis 1 % |
| festes Trägermittel | 99,9 bis 90 %, vorzugsweise 99,9 bis 99 % |
| Suspensions-Konzentrate | |
| Aktiver Wirkstoff | 5 bis 75 %, vorzugsweise 10 bis 50 % |
| Wasser | 94 bis 25 %, vorzugsweise 90 bis 30 % |
| oberflächenaktives Mittel | 1 bis 40 %, vorzugsweise 2 bis 30 % |
| Benetzbares Pulver | |
| Aktiver Wirkstoff | 0,5 bis 90 %, vorzugsweise 1 bis 80 % |
| oberflächenaktives Mittel | 0,5 bis 20 %, vorzugsweise 1 bis 15 % |
| festes Trägermittel | 5 bis 95 %, vorzugsweise 15 bis 90 % |
| Granulate | |
| Aktiver Wirkstoff | 0,5 bis 30 %, vorzugsweise 3 bis 15 % |
| festes Trägermittel | 99,5 bis 70 %, vorzugsweise 97 bis 85 %. |

Während als Handelsware eher konzentrierte Mittel bevorzugt werden, verwendet der Endverbraucher in der Regel verdünnte Mittel. Die Anwendungsformen können bis hinab zu 0,001 % an Wirkstoff verdünnt werden.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

In den folgenden Beispielen sind die Temperaturen in Celsiusgraden °C angegeben.

Beispiel 1

Herstellung von 2-Chlor-3'-methoxyamino-4'-nitro-4-trifluoromethyl-diphenyläther

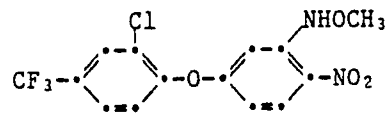

In einem Sulfierkolben werden 10 g 4-(2'-Chlor-4'-trifluormethylphenoxy)-1,2-dinitrobenzol, 4,6 g O-Methylhydroxylamin-hydrochlorid und 30 ml Dimethylsulfoxid vorgelegt. Diese Mischung wird gerührt und dazu werden 5,5 ml 30 %ige wässrige Natronlauge getropft. Nachdem alles zugegeben ist lässt man 12 Stunden bei Raumtemperatur weiterrühren, verdünnt das Reaktionsgemisch dann mit 500 ml Wasser und extrahiert es mit Essigsäureäthylester. Die organische Phase wird mit Wasser mehrmals gewaschen, über Natriumsulfat getrocknet und eingeengt. Der Rückstand wird aus Hexan umkristallisiert. Man erhält so 8 g des obigen Diphenyläther (83 % der Theorie) mit Schmelzpunkt 113°.

Beispiel 2

Herstellung von 2-Chlor-3'-N-methoxy-N-methylamino-4'-nitro-4-trifluormethyl-diphenyläther

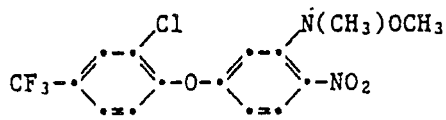

Man gibt unter Rühren in einem Sulfierkolben 9 g 4-(2'-Chlor-4'-trifluormethylphenoxy)-1,2-dinitrobenzol, 10 ml O-N-Dimethyl hydroxylamin und 20 ml Dimethylsulfoxid und lässt alles 3 Tage lang bei Raumtemperatur weiterrühren. Dann verdünnt man das Reaktionsgemisch mit 500 ml Wasser und extrahiert mit Essigsäureäthylester. Die organische Phase wird abgetrennt, zuerst mit verdünnter Salzsäure, dann mit Wasser gewaschen, über Natriumsulfat getrocknet und eingeengt. Der Rückstand wird durch Chromatographie über eine $SiO_2$.Säule mit einem Hexan/Aethylacetat 9 : 1 Gemisch als Laufmittel gereinigt. Nach verdampfen des Lösungsmittels verbleibt das Titelprodukt als gelbliches Oel.

Brechungsindex $n_D^{23.5}$ = 1.5558 ; Ausbeute 7,5 g (80 % der Theorie).

Beispiel 3

Herstellung von 2-Chlor-3'-N-tert.-Butoxyamino-4'-nitro-4-trifluormethyl-diphenyläther

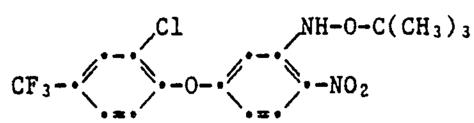

Im Sulfierkolben wird ein Gemisch von 10 g 4-(2'-Chlor-4'-trifluormethylphenoxy)-1,2-dinitrobenzol, 30 ml Dimethylsulfoxid, 8 g Triäthylamin und 5 g O-tert-Butylhydroxylamin-Hydrochlorid während ca. 14 Stunden bei Raumtemperatur verrührt. Danach wird das Reaktionsgemisch mit 500 ml Wasser verdünnt und mit Essigsäureäthylester extrahiert. Die organische Phase wird mit verdünnter Salzsäure und Wasser gewaschen, über Natriumsulfat getrocknet und eingeengt. Der Rückstand wird mit Hexan umkristallisiert. Man erhält so 6 g kristallines Titelprodukt, welches bei 120-122° schmilzt.

In analoger Weise zu diesen Beispielen werden folgende Verbindungen hergestellt :

(Siehe Tabelle Seite 7 f.)

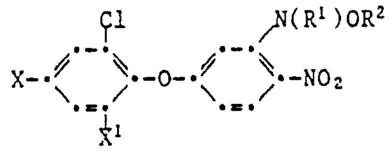

| No. | X | $X^1$ | $R^1$ | $R^2$ | phys. Daten |
|---|---|---|---|---|---|
| 1 | $CF_3$ | H | H | $CH_3$ | Smp. 113° Beispiel 1 |
| 2 | $CF_3$ | H | $CH_3$ | $CH_3$ | $n_D^{23.5}$ 1.5558 Beispiel 2 |
| 3 | $CF_3$ | H | H | $C(CH_3)_3$ | Smp. 120-122° Beispiel 3 |
| 4 | $CF_3$ | H | H | $C_2H_5$ | Smp. 66-67° |
| 5 | $CF_3$ | H | H | $CH_2-CH=CH_2$ | Smp. 49-52° |
| 6 | $CF_3$ | H | H | $CH_2CH=CHCl$ | $n_D^{26}$ 1.5836 |
| 7 | $CF_3$ | H | H | $C_4H_9n$, | $n_D^{23}$ 1.5694 |
| 8 | $CF_3$ | H | H | $C_6H_{13}n$ | $n_D^{23}$ 1.5585 |
| 9 | $CF_3$ | H | H | Benzyl | Smp. 97-100° |
| 10 | $CF_3$ | H | H | 2-Chlorbenzyl | Smp. 108-110° |
| 11 | $CF_3$ | H | H | $CH_2CH(CH_3)_2$ | Smp. 85-89° |
| 12 | $CF_3$ | H | H | $CH(CH_3)_2$ | |
| 13 | $CF_3$ | H | H | $C_3H_7n$ | |
| 14 | $CF_3$ | H | H | $CH_2C \equiv CH$ | |
| 15 | $CF_3$ | H | H | $CH_2CCl=CH_2$ | |
| 16 | $CF_3$ | H | H | $CH_2C(CH_3)=CH_2$ | Smp. 55° |
| 17 | Cl | H | $CH_3$ | $CH_3$ | |
| 18 | $CF_3$ | Cl | $CH_3$ | $CH_3$ | |
| 19 | $CF_3$ | Cl | $CH_3$ | $C_2H_5$ | |
| 20 | $CF_3$ | H | $CH_3$ | $C_2H_5$ | |
| 21 | $CF_3$ | H | $C_2H_5$ | $CH_3$ | |
| 22 | $CF_3$ | H | $CH_3$ | $C_3H_7$ | |
| 23 | $CF_3$ | Cl | H | $CH_3$ | |

Beispiel 4 : Formulierungsbeispiele für Wirkstoffe der Formel I (% = Gewichtsprozent)

| a) Spritzpulver | a) | b) | c) |
|---|---|---|---|
| Wirkstoff | 20 % | 60 % | 0,5 % |
| Na-Ligninsulfonat | 5 % | 5 % | 5 % |
| Na-Laurylsulfat | 3 % | - | - |
| Na-Diisobutylnaphthalinsulfonat | - | 6 % | 6 % |
| Octylpenolpolyäthylenglykoläther (7-8 Mol AeO) | - | 2 % | 2 % |
| Hochdisperse Kieselsäure | 5 % | 27 % | 27 % |
| Kaolin | 67 % | - | - |
| Natriumchlorid | - | - | 59,5 % |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| b) Emulsions-Konzentrat | a) | b) |
|---|---|---|
| Wirkstoff | 10 % | 1 % |
| Octylphenolpolyäthylenglykoläther (4-5 Mol AeO) | 3 % | 3 % |
| Ca-Dodecylbenzolsulfonat | 3 % | 3 % |
| Ricinusölpolyglykoläther (36 Mol AeO) | 4 % | 4 % |
| Cyclohexanon | 30 % | 10 % |
| Xylolgemisch | 50 % | 79 % |

Aus diesem Konzentrat können durch Verdünnen mit Wasser Emulsionen jeder gewünschten Konzentration hergestellt werden.

| c) Stäubemittel | a) | b) |
|---|---|---|
| Wirkstoff | 0,1 % | 1 % |
| Talkum | 99,9 % | - |
| Kaolin | - | 99 % |

Man erhält anwendungsfertige Stäubemittel, indem der Wirkstoff mit dem Träger vermischt und auf einer geeigneten Mühle vermahlen wird.

| d) Extruder Granulat | a) | b) |
|---|---|---|
| Wirkstoff | 10 % | 1 % |
| Na-Ligninsulfonat | 2 % | 2 % |
| Carboxymethylcellulose | 1 % | 1 % |
| Kaolin | 87 % | 96 % |

Der Wirkstoff wird mit den Zusatzstoffen vermischt, vermahlen und mit Wasser angefeuchtet. Dieses Gemisch wird extrudiert und anschliessend im Luftstrom getrocknet.

| e) Umhüllungs-Granulat | |
|---|---|
| Wirkstoff | 3 % |
| Polyäthylenglykol (MG 200) | 3 % |
| Kaolin | 94 % |

Der fein gemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

| f) Suspensions-Konzentrat | a) | b) |
|---|---|---|
| Wirkstoff | 40 % | 5 % |
| Aethylenglykol | 10 % | 10 % |
| Nonylphenolpolyäthylenglykoläther (15 Mol AeO) | 6 % | 1 % |
| Na-Ligninsulfonat | 10 % | 5 % |
| Carboxymethylcellulose | 1 % | 1 % |
| 37 %ige wässrige Formaldehyd-Lösung | 0,2 % | 0,2 % |
| Silikonöl in Form einer 75 %igen wässrigen Emulsion | 0,8 % | 0,8 % |
| Wasser | 32 % | 77 % |

Der fein gemahlene Wirkstoff wird mit den Zusatzstoffen innig vermisch. Man erhält so ein Suspensions-Konzentrat, aus welchem durch Verdünnen mit Wasser Suspensionen jeder gewünschten Konzentration hergestellt werden können.

g) Salzlösung

| | |
|---|---|
| Wirkstoff | 5 % |
| Isopropylamin | 1 % |
| Octylphenolpolyäthylenglykoläther (78 Mol AeO) | 3 % |
| Wasser | 91 % |

Beispiel 5

Biologische Versuche zum Nachweis der Wirkung der Verbindungen der Formel I

Pre-emergente Herbizidwirkung (Vorauflaufwirkung)

Im Gewächshaus werden Pflanzensamen in Blumentöpfe von 12-15 cm Durchmesser gesät, so dass sich pro Topf 10-25 Pflänzchen entwickeln können. Unmittelbar nach der Einsaat wird die Erdoberfläche mit einer wässrigen Suspension des Wirkstoffes Nr. 2 erhalten aus einem 10 %igen Spritzpulver, behandelt. Es wird eine Konzentrationsreihe angewendet, welche von 2 bis 0,25 kg Wirksubstanz pro Hektar entspricht. Die Blumentöpfe werden im Gewächshaus bei 22-25 °C und 50-70 % relativer Luftfeuchtigkeit und regelmässigem Begiessen gehalten und der Versuch nach 3 Wochen ausgewertet. Der Zustand der Pflanzen wurde gemäss dem folgenden Bewertungsschema registriert:

9 Pflanze gedeiht wie unbehandelte Kontrolle
6-9 leichte Schäden
5 mittlere Schäden
2-4 schwere Schäden
1 Pflanze abgestorben
- Pflanze nicht geprüft.

Die Resultate sind wie folgt:

| Aufwandmenge | 2 | 1 | 0.5 | 0.25 |
|---|---|---|---|---|
| Pflanze | | | | |
| Weizen | 7 | 9 | 9 | 9 |
| Mais | 7 | 8 | 9 | 9 |
| Reis | 8 | 9 | 9 | 9 |
| Soja | 7 | 8 | 8 | 9 |
| Baumwolle | 6 | 7 | 8 | 9 |
| Alopeurus myosuroides | 1 | 1 | 1 | 2 |
| Digitaria sanguinalis | 1 | 1 | 1 | 1 |
| Echinochloa crus galli | 1 | 1 | 2 | 4 |
| Sorghum halepense | 1 | 1 | 4 | 4 |
| Abutilon | 1 | 1 | 2 | 2 |
| Sida spinosa | 1 | 1 | 2 | 2 |
| Amaranthus retroflexus | 1 | 1 | 1 | 1 |
| Chenopodium album | 1 | 1 | 1 | 1 |
| Solanum nigrum | 1 | 1 | 2 | 3 |
| Stellaria media | 1 | 1 | 3 | 3 |
| Chrysanthemum leucum | 1 | 1 | 1 | 1 |
| Viola tricolor | 1 | 1 | 1 | 1 |
| Veronica sp. | 1 | 1 | 1 | 1 |

Post-emergente Herbizidwirkung (Nachauflaufwirkung)

Eine Anzahl Unkräuter und Kulturpflanzen, sowohl monocotyle wie dicotyle, wird nach dem Auflaufen (im 4-bis 6-Blattstadium) mit einer wässrigen Wirkstoffdispersion in Dosierungen von 2 bis 0,25 kg Wirksubstanz pro Hektar auf die Pflanzen gespritzt und diese bei 24°-26° und 45-60 % rel. Luftfeuchtigkeit gehalten. 15 Tage nach Behandlung wird der Versuch nach derselben Notenskale wie im Preemergenten-Versuch ausgeweitet.

Die Resulate sind wie folgt :

| Verbindung | 2 | | | | 4 | | | | 5 | | | |
|---|---|---|---|---|---|---|---|---|---|---|---|---|
| Aufwandmenge kg/ha | 2 | 1 | 0.5 | 0.25 | 2 | 1 | 0.5 | 0.25 | 2 | 1 | 0.5 | 0.25 |
| Pflanze | | | | | | | | | | | | |
| Gerste | 7 | 8 | 8 | 9 | 7 | 8 | 8 | 8 | 7 | 8 | 8 | 8 |
| Weizen | 7 | 8 | 9 | 9 | 7 | 8 | 8 | 8 | 7 | 8 | 8 | 8 |
| Mais | 7 | 8 | 9 | 9 | 6 | 6 | 8 | 8 | 6 | 7 | 8 | 8 |
| Reis | 9 | 9 | 9 | 9 | 6 | 7 | 8 | 9 | 6 | 7 | 9 | 9 |
| Soja | 5 | 6 | 6 | 7 | 6 | 7 | 8 | 8 | 7 | 8 | 8 | 8 |
| Abutilon | 1 | 1 | 1 | 1 | 3 | 3 | 3 | 4 | 3 | 3 | 3 | 4 |
| Sida spinosa | 1 | 2 | 2 | 3 | 2 | 2 | 2 | 2 | 1 | 2 | 2 | 3 |
| Amaranthus retroflexus | 2 | 2 | 2 | 2 | 1 | 1 | 1 | 1 | 1 | 1 | 1 | 1 |
| Chenopodium album | 1 | 1 | 1 | 1 | 2 | 2 | 2 | 2 | 1 | 1 | 1 | 2 |
| Solanum nigrum | 1 | 1 | 1 | 2 | 2 | 2 | 2 | 4 | 3 | 3 | 4 | 4 |
| Ipomoea purpurea | 1 | 1 | 1 | 1 | 1 | 1 | 1 | 1 | 1 | 1 | 2 | 2 |
| Sinapis alba | 1 | 1 | 1 | 1 | 1 | 2 | 3 | 4 | 1 | 1 | 1 | 3 |
| Chrysanthemum | 1 | 1 | 1 | 1 | 1 | 1 | 1 | 1 | 1 | 1 | 1 | 1 |
| Galium apanne | 2 | 2 | 2 | 3 | 2 | 2 | 2 | 3 | 3 | 3 | 4 | 4 |
| Viola tricolor | 1 | 1 | 1 | 1 | 1 | 1 | 1 | 1 | 1 | 1 | 1 | 1 |
| Veronica sp | 1 | 1 | 1 | 1 | 1 | 1 | 1 | 1 | 1 | 1 | 1 | 1 |

Selektive herbizide Wirkung auf Reis im Nachauflaufverfahren

Reispflänzchen, welche 25 Tage als sind, wurden im Gewächshaus in grosse rechteckige Eternitschalen verpflanzt. Zwischen die Reihen der Reispflanzen wurden dann Samen der in Reiskulturen vorkommenden Unkräuter Echinochloa crus galli, Scirpus, Monocharia und Sagittaria gesät. Die Schalen wurden gut bewässert und bei einer Temperatur von ca. 25 °C und hoher Luftfeuchtigkeit gehalten. Nach 12 Tagen, wenn die Unkräuter aufgelaufen sind und das 2-3 Blattstadium erreicht haben, wurde die Erde in der Schale mit einer 2,5 cm hohen Schicht Wasser bedeckt. Der Wirkstoff wurde dann als Emulsionskonzentrat mittels einer Pipette zwischen die Pflanzenreihen appliziert, wobei man das Emulsionskonzentrat so verdünnt, dass der Wirkstoff in einer Konzentration vorliegt, die einer Aufwandmenge von 1, 0,5 und 0,25 kg/ha entspricht. Der Versuch wird 4 Wochen nach dieser Behandlung ausgewertet und der Zustand der Pflanzen gemäss der obigen Notenskala beurteilt.

Die Ergebnisse sind wie folgt :

| Verbindung | 2 | | | 4 | | | 5 | | |
|---|---|---|---|---|---|---|---|---|---|
| | 1 | 0.5 | 0.25 | 1 | 0.5 | 0.25 | 1 | 0.5 | 0.25 |
| Pflanze | | | | | | | | | |
| Reis | 6 | 6 | 8 | 9 | 9 | 9 | 8 | 9 | 9 |
| Echinochloa crus galli | 1 | 1 | 1 | 4 | 4 | 4 | 4 | 5 | 5 |
| Scirpus | 1 | 1 | 1 | 1 | 2 | 2 | 1 | 1 | 4 |
| Monocharia | 1 | 1 | 1 | 1 | 1 | 1 | 1 | 1 | 1 |
| Sagittaria | 1 | 2 | 2 | 4 | 4 | 4 | 3 | 3 | 4 |

**Patentansprüche**

1. Diphenyläther-hydroxylamine der Formel I

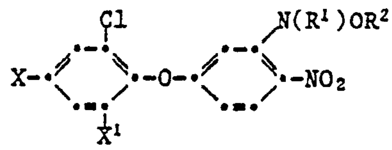

(I)

worin

$R^1$ Wasserstoff oder einen $C_1$-$C_6$-Alkylrest,

$R^2$ ist ein $C_1$-$C_6$-Alkyl, $C_3$-$C_6$-Alkenyl oder $C_3$-$C_6$-Alkinylrest, der unsubstituiert oder durch Halogen substituiert sein kann,

X Chlor oder die Trifluormethylgruppe und

$X^1$ Wasserstoff oder Chlor

bedeuten

2. Diphenyläther-hydroxylamine der Formel I, gemäss Anspruch 1, in denen $R^1$ Wasserstoff bedeutet.

3. Diphenyläther-hydroxylamine der Formel I, gemäss Anspruch 1, worin $R^1$ Wasserstoff oder ein $C_1$-$C_6$-Alkylrest und $R^2$ einen $C_1$-$C_6$-Alkyl-, $C_3$-$C_6$-Alkenyl- oder $C_3$-$C_6$-Alkinylrest bedeutet welche Reste unsubstituiert oder durch Halogen, substituiert sein können, während X die Trifluormethylgruppe und $X^1$ Wasserstoff bedeuten.

4. Diphenyläther-hydroxylamine der Formel I, Anspruch 1, worin $R^1$ Wasserstoff, $R^2$ einen $C_1$-$C_6$-Alkyl-, $C_3$-$C_6$-Alkenyl oder $C_3$-$C_6$-Alkinylrest, der durch Halogen, substituiert sein kann, während X die Trifluormethylgruppe und $X^1$ Wasserstoff bedeuten.

5. 2-Chlor-3'-methoxyamino-4'-nitro-4-trifluormethyl-diphenyläther gemäss Anspruch 1.

6. 2-Chlor-3'-N,O-dimethyl-hydroxylamino-4'-nitro-4-trifluormethyl-diphenyläther gemäss Anspruch 1.

7. 2-Chlor-3'-N-tert-butoxyamino-4'-nitro-4-trifluormethyl-diphenyläther gemäss Anspruch 1.

8. 2-Chlor-3'-N-äthoxyamino-4'-nitro-4-trifluormethyl-diphenyläther gemäss Anspruch 1.

9. 2-Chlor-3'-N-allyloxyamino-4'-nitro-4-trifluormethyl-diphenyläther gemäss Anspruch 1.

10. 2-Chlor-3'-N-chlorallyloxyamino-4'-nitro-4-trifluormethyl-diphenyläther gemäss Anspruch 1.

11. 2-Chlor-3'-N-n-butoxyamino-4'-nitro-4-trifluormethyl-diphenyläther gemäss Anspruch 1.

12. 2-Chlor-3'-N-n-hexyloxyamino-4'-nitro-4-trifluormethyl-diphenyläther gemäss Anspruch 1.

13. 2-Chlor-3'-N-benzyloxyamino-4'-nitro-4-trifluormethyl-diphenyläther.

14. 2-Chlor-3'-N-(2'-chlorbenzyloxy)-amino-4'-nitro-4-trifluormethyl-diphenyläther.

15. 2-Chlor-3'-N-isobutoxyamino-4'-nitro-4-trifluormethyl-diphenyläther gemäss Anspruch 1.

16. Verfahren zur Herstellung der Diphenylätherhydroxylamine der Formel I, Anspruch 1, dadurch gekennzeichnet, dass man ein 5-ortho-Chlorphenoxy-nitrobenzol der Formel II

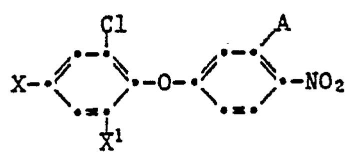

(II)

worin X und $X^1$ die im Anspruch 1 gegebene Bedeutung haben und A eine Abgangsgruppe, Nitro, Chlor oder

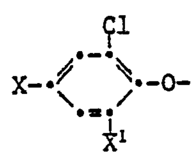

darstellt, in einem inerten organischen Lösungsmittel in Gegenwart der mindestens äquimolaren Menge einer Base mit einem Hydroxylamin der Formel III umsetzt

$$H—N(R^1)—OR^2 \qquad (III)$$

17. Verfahren zur Herstellung der Diphenylätherhydroxylamine der Formel I, Anspruch 1, in denen $R^1$ nicht Wasserstoff bedeutet, dadurch gekennzeichnet, dass man ein Diphenyläther-hydroxylamin der Formel Ia

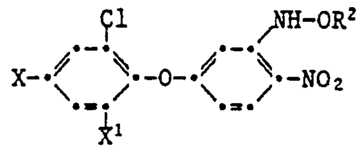

(Ia)

worin $R^2$, X und $X^1$ die im Anspruch 1 gegebene Bedeutung haben, in einem inerten organischen Lösungsmittel, in Gegenwart der mindestens äquimolaren Menge einer Base, mit einem reaktionsfähigen Alkylester der Formel IV umsetzt,

$$R^1—Y \qquad (IV),$$

worin $R^1$ die unter der Formel I gegebene Bedeutung hat und Y ein Halogenatom oder das Anion einer Alkyl-, Halogenalkyl- oder Arylsulfon- oder -schwefelsäure bedeutet.

18. Herbizides Mittel, dadurch gekennzeichnet, dass es neben inerten Zutaten als Wirkstoff ein Diphenyläther-hydroxylamin der Formel I gemäss Anspruch 1 enthält.

19. Verfahren zur selektiven Bekämpfung von Unkräutern in Nutzpflanzenkulturen, dadurch gekennzeichnet, dass man die Kulturen mit einer wirksamen Menge eines Diphenyläther-hydroxylamines gemäss Anspruch 1, oder eines Mittels welches ein solches Diphenylätherhydroxylamin enthält, behandelt.

20. Verfahren gemäss Anspruch 19 zur selektiven Unkrautbekämpfung in Kulturen von Getreide, Mais, Reis und Soja.

21. Verfahren zur Regulierung des Pflanzenwuchses, dadurch gekennzeichnet, dass man die Pflanzen oder Pflanzenteile, deren Wachstum man regulieren möchte, mit einer wirksamen Menge eines Diphenyläther-hydroxylamines gemäss Anspruch 1, oder eines Mittels welches ein solches Diphenyläther-hydroxylamin enthält, behandelt.

## Claims

1. Diphenyl ether hydroxylamines of formula I

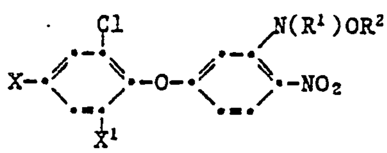

(I)

wherein

$R^1$ is hydrogen or a $C_1$-$C_6$alkyl radical,

$R^2$ is a $C_1$-$C_6$alkyl, $C_3$-$C_6$alkenyl or $C_3$-$C_6$alkynyl radical which may be unsubstituted or substituted by halogen,

X is chlorine or the trifluoromethyl group and

$X^1$ is hydrogen or chlorine.

2. Diphenyl ether hydroxylamines of formula I according to claim 1, wherein $R^1$ is hydrogen.

3. Diphenyl ether hydroxylamines of formula I according to claim 1, wherein $R^1$ is hydrogen or a $C_1$-$C_6$alkyl radical and $R^2$ is a $C_1$-$C_6$alkyl, $C_3$-$C_6$alkenyl or $C_3$-$C_6$alkynyl radical, which radicals may be unsubstituted or substituted by halogen, whilst X is the trifluoromethyl group and $X^1$ is hydrogen.

4. Diphenyl ether hydroxylamines of formula I according to claim 1, wherein $R^1$ is hydrogen, $R^2$ is a $C_1$-$C_6$alkyl, $C_3$-$C_6$alkenyl or $C_3$-$C_6$alkynyl radical which may be substituted by halogen, whilst X is the trifluoromethyl group and $X^1$ is hydrogen.

5. 2-Chloro-3'-methoxyamino-4'-nitro-4-trifluoromethyldiphenyl ether according to claim 1.

6. 2-Chloro-3'-N,O-dimethylhydroxylamino-4'-nitro-4-trifluoromethyldiphenyl ether according to claim 1.

7. 2-Chloro-3'-N-tert.-butoxyamino-4'-nitro-4-trifluoromethyldiphenyl ether according to claim 1.

8. 2-Chloro-3'-N-ethoxyamino-4'-nitro-4-trifluoromethyldiphenyl ether according to claim 1.

9. 2-Chloro-3'-N-allyloxyamino-4'-nitro-4-trifluoromethyldiphenyl ether according to claim 1.

10. 2-Chloro-3'-N-chloroallyloxyamino-4'-nitro-4-trifluoromethyldiphenyl ether according to claim 1.

11. 2-Chloro-3'-N-n-butoxyamino-4'-nitro-4-trifluoromethyldiphenyl ether according to claim 1.

12. 2-Chloro-3'-N-n-hexyloxyamino-4'-nitro-4-trifluoromethyldiphenyl ether according to claim 1.

13. 2-Chloro-3'-N-benzyloxyamino-4'-nitro-4-trifluoromethyldiphenyl ether.

14. 2-Chloro-3'-N-(2'-chlorobenzyloxy)amino-4'-nitro-4-trifluoromethyldiphenyl ether.

15. 2-Chloro-3'-N-isobutoxyamino-4'-nitro-4-trifluoromethyldiphenyl ether according to claim 1.

16. A process for the preparation of the diphenyl ether hydroxylamines of formula I according to claim 1, which process comprises reacting a 5-ortho-chlorophenoxynitrobenzene of formula II

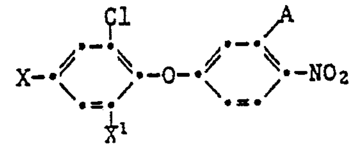

(II)

wherein X and $X^1$ are as defined in claim 1 and A is a leaving group, nitro, chlorine or

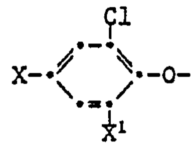

with a hydroxylamine of formula III

$$H—N(R^1)—OR^2 \quad (III)$$

in an inert organic solvent and in the presence of at least the equimolar amount of a base.

17. A process for the preparation of the diphenyl ether hydroxylamines of formula I, claim 1, wherein $R^1$ is not hydrogen, which process comprises reacting a diphenyl ether hydroxylamine of formula Ia

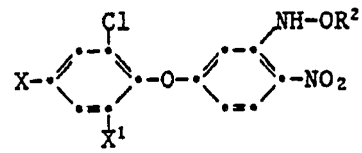

(Ia)

wherein $R^2$, X and $X^1$ are as defined in claim 1, with a reactive alkyl ester of formula IV

$$R^1—Y \quad (IV)$$

wherein $R^1$ is as defined for formula I and Y is a halogen atom or the anion of an alkylsulfonic, haloalkylsulfonic or arylsulfonic acid or of an alkylsulfuric, haloalkylsulfuric or arylsulfuric acid, in an inert organic solvent and in the presence of at least the equimolar amount of a base.

18. A herbicidal composition which contains, as active ingredient, a diphenyl ether hydroxylamine of formula I according to claim 1, together with inert adjuvants.

19. A method of selectively controlling weeds in crops of useful plants, which method comprises treating the crops with an effective amount of a diphenyl ether hydroxylamine according to claim 1 or of a composition containing such a diphenyl ether hydroxylamine.

20. A method according to claim 19 for selective weed control in crops of cereals, maize, rice and soybeans.

21. A method of regulating plant growth, which method comprises treating the plants or the parts of the plants whose growth it is desired to regulate with an effective amount of a diphenyl ether hydroxylamine according to claim 1 or of a composition containing such a diphenyl ether hydroxylamine.

**Revendications**

1. Diphényléther-hydroxylamines de formule I

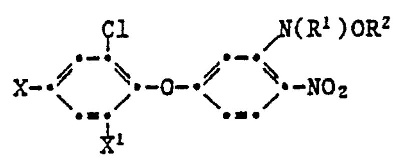

(I)

dans laquelle

$R^1$ est l'hydrogène ou un reste alkyle $C_1$-$C_6$,

$R^2$ est un reste alkyle $C_1$-$C_6$, alcényle $C_3$-$C_6$ ou alcynyle $C_3$-$C_6$ qui peut être non substitué ou substitué par un halogène,

X est le chlore ou le groupe trifluorométhyle et

$X^1$ est l'hydrogène ou le chlore.

2. Diphényléther-hydroxylamines de formule I, selon la revendication 1, dans lesquelles $R^1$ est l'hydrogène.

3. Diphényléther-hydroxylamines de formule I, selon la revendication 1, dans laquelle $R^1$ est l'hydrogène ou un reste alkyle $C_1$-$C_6$ et $R^2$ est un reste alkyle $C_1$-$C_6$, alcényle $C_3$-$C_6$ ou alcynyle $C_3$-$C_6$, ces restes pouvant être non substitués ou substitués par un halogène, tandis que X est le groupe trifluorométhyle et $X^1$ l'hydrogène.

4. Diphényléther-hydroxylamines de formule I, selon la revendication 1, dans laquelle $R^1$ est l'hydrogène, $R^2$ est un reste alkyle $C_1$-$C_6$, alcényle $C_3$-$C_6$ ou alcynyle $C_3$-$C_6$ qui peut être substitué par un halogène, tandis que X est le groupe trifluorométhyle et $X^1$ est l'hydrogène.

5. 2-chloro-3'-méthoxyamino-4'-nitro-4-trifluorométhyl-diphényléther selon la revendication 1.

6. 2-chloro-3'-N,O-diméthyl-hydroxylamino-4'-nitro-4-trifluorométhyl-diphényléther selon la revendication 1.

7. 2-chloro-3'-N-tert-butoxyamino-4'-nitro-4-trifluorométhyl-diphényléther selon la revendication 1.

8. 2-chloro-3'-N-éthoxyamino-4'-nitro-4-trifluorométhyl-diphényléther selon la revendication 1.

9. 2-chloro-3'-N-allyloxyamino-4'-nitro-4-trifluorométhyl-diphényléther selon la revendication 1.

10. 2-chloro-3'-N-chlorallyloxyamino-4'-nitro-4-trifluorométhyl-diphényléther selon la revendication 1.

11. 2-chloro-3'-N-n-butoxyamino-4'-nitro-4-trifluorométhyl-diphényléther selon la revendication 1.

12. 2-chloro-3'-N-n-hexyloxyamino-4'-nitro-4-trifluorométhyl-diphényléther selon la revendication 1.

13. 2-chloro-3'-N-benzyloxyamino-4'-nitro-4-trifluorométhyl-diphényléther.

14. 2-chloro-3'-N-(2'-chlorobenzyloxy)-amino-4'-nitro-4-trifluorométhyl-diphényléther.

15. 2-chloro-3'-N-isobutoxyamino-4'-nitro-4-trifluorométhyl-diphényléther selon la revendication 1.

16. Procédé de préparation de diphényléther-hydroxylamine de formule I, caractérisé en ce qu'on fait réagir un 5-ortho-chlorophénoxy-nitrobenzène de Formule II

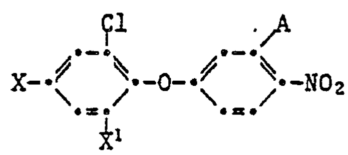

(II)

dans laquelle X et $X^1$ ont la signification donnée dans la revendication 1, et A représente un groupe éliminable, nitro, chloro ou

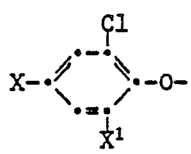

dans un solvant organique inerte, en présence d'au moins une quantité équimolaire d'une base, avec une hydroxylamine de Formule III

$$H—N(R^1)—OR^2 \qquad (III)$$

17. Procédé de préparation des diphényléther-hydroxylamines de Formule I, dans lesquelles $R^1$ n'est pas l'hydrogène, caractérisé en ce qu'on fait réagir une diphényléther-hydroxylamine de Formule Ia

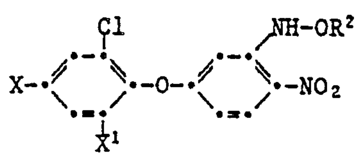

(Ia)

dans laquelle $R^2$, X et $X^1$ ont la signification donnée dans la revendication 1, dans un solvant organique inerte, en présence d'une quantité au moins équimoléculaire d'une base, avec un ester d'alkyle réactif de formule IV,

$$R^1—Y \qquad (IV)$$

dans laquelle $R^1$ a la signification donnée pour la formule I et Y est un atome d'halogène ou l'anion d'un acide d'alkyle, d'halogénoalkyle ou arylsulfonique ou arylsulfurique.

18. Moyen herbicide caractérisé en ce que, outre des additifs inertes, il contient comme principe actif une diphényléther-hydroxylamine de formule I selon la revendication 1.

19. Procédé de lutte sélective contre les mauvaises herbes dans les cultures de plantes utiles, caractérisé en ce qu'on traite les cultures avec une quantité efficace d'une diphényléther-hydroxylamine selon la revendication 1 ou avec un moyen qui contient une telle diphényléther-hydroxylamine.

20. Procédé selon la revendication 19 pour la lutte sélective contre les mauvaises herbes dans les cultures de céréales, maïs, riz et soja.

21. Procédé de régulation de la croissance des plantes, caractérisé en ce qu'on traite les plantes ou les parties de plantes dont on veut réguler la croissance avec une quantité efficace d'une diphényléther-hydroxylamine selon la revendication 1, ou d'un moyen qui contient une telle diphényléther-hydroxylamine.